# EUROPEAN PATENT APPLICATION

(11) **EP 3 196 751 A1**
(43) Date of publication of application: **26.07.2017**
(21) Application number: 17152138.8
(22) Date of filing: 19.01.2017
(51) Int. Cl.: G06F 3/0488

(54) **GESTURE IDENTIFICATION METHOD AND DEVICE**

(30) Priority: 19.01.2016 CN 201610034534
(71) Applicant: Beijing Xiaomi Mobile Software Co., Ltd., Beijing 100085 (CN)
(72) Inventor: LI, Guosheng, Beijing, Beijing 100085 (CN); SUN, Wei, Beijing, Beijing 100085 (CN); JIANG, Zhongsheng, Beijing, Beijing 100085 (CN)
(74) Representative: dompatent von Kreisler Selting Werner - Partnerschaft von Patent- und Rechtsanwälten mbB

(57) **Abstract**

Disclosed is a gesture identification method and device, applied to a terminal including a touch screen, a proximity sensor being distributed in the touch screen, the proximity sensor including a transmitter for sending a signal and a receiver for receiving a reflected signal reflected after the signal is blocked by an operating object. The method includes that: when a receiver of at least one proximity sensor receives a reflected signal and touch operation of the operating object over the touch screen is not detected, if it is detected that the receiver of the proximity sensor is switched from no reception of reflected signals to reception of the reflected signal and then is switched from reception of the reflected signal to no reception of reflected signals, an operating gesture of a user is identified according to a position of the at least one proximity sensor.

## Description

### TECHNICAL FIELD

The present disclosure generally relates to the technical field of display, and more particularly, to a gesture identification method and device.

### BACKGROUND

Along with development of a touch screen technology, a touch screen has more and more functions, such as a gesture identification function.

In a related technology, a touch screen determines a touch position where a finger of a user touches the touch screen, and then identifies a gesture of the user according to the touch position.

### SUMMARY

In order to solve a problem in the related technology, the present disclosure provides a gesture identification method and device.

According to a first aspect, the invention relates to a gesture identification method, which may be applied to a terminal including a touch screen, a proximity sensor being distributed in the touch screen, the proximity sensor including a transmitter and a receiver, the transmitter being configured to send a signal, the receiver being configured to receive a reflected signal reflected after the signal is blocked by an operating object, the method including:

when a receiver of at least one proximity sensor receives a reflected signal and touch operation of the operating object over the touch screen is not detected, detecting whether the at least one proximity sensor meets a preset changing rule or not, the preset changing rule being that the receiver of the proximity sensor is switched from no reception of reflected signals to reception of the reflected signal and then is switched from reception of the reflected signal to no reception of reflected signals;
when the at least one proximity sensor meets the preset changing rule, determining a position of the at least one proximity sensor; and
identifying an operating gesture of a user according to the position of the at least one proximity sensor. In that the preset changing rule can be summarized that the receiver of the proximity sensor is switched from a first state in which said proximity sensor does not receive reflected signals to a second state in which the proximity sensor receives the reflected signal and then switched from the second state in which the proximity sensor does receive the reflected signal to the first state in which the proximity sensor does not receive the reflected signal.

According to a exemplary embodiment, the step of detecting whether the at least one proximity sensor meets the preset changing rule or not may include:
for each of the at least one proximity sensor, acquiring a proximity value measured by the proximity sensor, the proximity value being configured to indicate a distance between the operating object and the proximity sensor and the proximity value being a preset numerical value when the receiver receives no reflected signals, i. e. the receiver does not receive the reflected signals;
detecting whether the proximity value changes from the preset numerical value to a first numerical value and then changes from the first numerical value to the preset numerical value or not; and
when the proximity value changes from the preset numerical value to the first numerical value and then changes from the first numerical value to the preset numerical value, determining that the receiver of the proximity sensor is switched from no reception of reflected signals to reception of the reflected signal and then is switched from reception of the reflected signal to no reception of reflected signals and the preset changing rule is met.

According to a exemplary embodiment, the step of identifying the operating gesture of the user according to the position of the at least one proximity sensor may include:
acquiring a sequence in which the receiver of the at least one proximity sensor sequentially receives the reflected signal; and
identifying the position of the at least one proximity sensor as the operating gesture according to the sequence.

According to a exemplary embodiment, the method may further include:
acquiring, from the at least one proximity sensor, a changing time length of the proximity value of each of the at least one proximity sensor;
calculating an average value of each changing time length;
determining an operating speed of the gesture according to the average value;
and
determining a response manner for the gesture according to the operating speed.

According to a exemplary embodiment, the method may further include:
acquiring, from the at least one proximity sensor, a proximity value measured by each of the at least one proximity sensor;
detecting whether each proximity value is unequal to a preset numerical value within a same time period or not, the preset numerical value being a proximity value when the receiver receives no reflected signals; and
when each proximity value is unequal to the preset numerical value within the same time period, identifying a blocking gesture of the user.

According to a exemplary embodiment, the method may further include:
acquiring, from the at least one proximity sensor, a proximity value measured by each of the at least one proximity sensor, the proximity value being a preset numerical value when the receiver receives no reflected signals;
detecting whether the proximity value changes from the preset numerical value to a second numerical value, then decreases from the second numerical value to a third numerical value, then increases from the third numerical value to the second numerical value and then changes from the second numerical value to the preset numerical value or not; and
identifying a clicking gesture of the user when the proximity value changes from the preset numerical value to the second numerical value, then decreases from the second numerical value to the third numerical value, then increases from the third numerical value to the second numerical value and then changes from the second numerical value to the preset numerical value.

According to a second aspect, the invention relates to a gesture identification device, which may be applied to a terminal including a touch screen, a proximity sensor being distributed in the touch screen, the proximity sensor including a transmitter and a receiver, the transmitter being configured to send a signal, the receiver being configured to receive a reflected signal reflected after the signal is blocked by an operating object, the device including:
a first detection module, configured to, when a receiver of at least one proximity sensor receives a reflected signal and touch operation of the operating object over the touch screen is not detected, detect whether the at least one proximity sensor meets a preset changing rule or not, the preset changing rule being that the receiver of the proximity sensor is switched from no reception of reflected signals to reception of the reflected signal and then is switched from reception of the reflected signal to no reception of reflected signals;
a first determination module, configured to, when a detection result of the first detection module is that the at least one proximity sensor meets the preset changing rule, determine a position of the at least one proximity sensor; and
a first identification module, configured to identify an operating gesture of a user according to the position, determined by the first determination module, of the at least one proximity sensor. In that the preset changing rule can be summarized that the receiver of the proximity sensor is switched from a first state in which said proximity sensor does not receive reflected signals to a second state in which the proximity sensor receives the reflected signal and then switched from the second state in which the proximity sensor does receive the reflected signal to the first state in which the proximity sensor does not receive the reflected signal.

According to a particular embodiment, the first detection module may include:
a first acquisition sub-module, configured to, for each of the at least one proximity sensor, acquire a proximity value measured by the proximity sensor, the proximity value being configured to indicate a distance between the operating object and the proximity sensor and the proximity value being a preset numerical value when the receiver receives no reflected signals, i. e. the receiver does not receive reflected signals;
a detection sub-module, configured to detect whether the proximity value acquired by the first acquisition sub-module changes from the preset numerical value to a first numerical value and then changes from the first numerical value to the preset numerical value or not; and
a determination sub-module, configured to, when a detection result of the detection sub-module is that the proximity value changes from the preset numerical value to the first numerical value and then changes from the first numerical value to the preset numerical value, determine that the receiver of the proximity sensor is switched from no reception of reflected signals to reception of the reflected signal and then is switched from reception of the reflected signal to no reception of reflected signals and the preset changing rule is met.

According to a particular embodiment, the first identification module may include:
a second acquisition sub-module, configured to acquire a sequence in which the receiver of the at least one proximity sensor sequentially receives the reflected signal; and
an identification sub-module, configured to identify the position of the at least one proximity sensor as the operating gesture according to the sequence acquired by the second acquisition sub-module.

According to a particular embodiment, the device may further include:
a first acquisition module, configured to , from the at least one proximity sensor, a changing time length of the proximity value of each of the at least one proximity sensor;
a calculation module, configured to calculate an average value of each changing time length acquired by the first acquisition module;
a second determination module, configured to determine an operating speed of the gesture according to the average value calculated by the calculation module; and
a third determination module, configured to determine a response manner for the gesture according to the operating speed determined by the second determination module.

According to a particular embodiment, the device may further include:
a second acquisition module, configured to acquire, from the at least one proximity sensor, a proximity value measured by each of the at least one proximity sensor;
a second detection module, configured to detect whether each proximity value acquired by the second acquisition module is unequal to a preset numerical value within a same time period or not, the preset numerical value being a proximity value when the receiver receives no reflected signals; and
a second identification module, configured to, when a detection result of the second detection module is that each proximity value is unequal to the preset numerical value within the same time period, identify a blocking gesture of the user.

According to a particular embodiment, the device may further include:
a third acquisition module, configured to acquire, from the at least one proximity sensor, a proximity value measured by each of the at least one proximity sensor, the proximity value being a preset numerical value when the receiver receives no reflected signals;
a third detection module, configured to detect whether the proximity value acquired by the third acquisition module changes from the preset numerical value to a second numerical value, then decreases from the second numerical value to a third numerical value, then increases from the third numerical value to the second numerical value and then changes from the second numerical value to the preset numerical value or not; and
a third identification module, configured to identify a clicking gesture of the user when a detection result of the third detection module is that the proximity value changes from the preset numerical value to the second numerical value, then decreases from the second numerical value to the third numerical value, then increases from the third numerical value to the second numerical value and then changes from the second numerical value to the preset numerical value.

According to a third aspect, the invention relates to a gesture identification device, which may be applied to a terminal including a touch screen, a proximity sensor being distributed in the touch screen, the proximity sensor including a transmitter and a receiver, the transmitter being configured to send a signal, the receiver being configured to receive a reflected signal reflected after the signal is blocked by an operating object, the device including:
a processor; and
a memory for storing instructions executable by the processor,
wherein the processor may be configured to:
   when a receiver of at least one proximity sensor receives a reflected signal and touch operation of the operating object over the touch screen is not detected, detect whether the at least one proximity sensor meets a preset changing rule or not, the preset changing rule being that the receiver of the proximity sensor is switched from no reception of reflected signals to reception of the reflected signal and then is switched from reception of the reflected signal to no reception of reflected signals;
   when the at least one proximity sensor meets the preset changing rule, determine a position of the at least one proximity sensor; and
   identify an operating gesture of a user according to the position of the at least one proximity sensor. In that the preset changing rule can be summarized that the receiver of the proximity sensor is switched from a first state in which said proximity sensor does not receive reflected signals to a second state in which the proximity sensor receives the reflected signal and then switched from the second state in which the proximity sensor does receive the reflected signal to the first state in which the proximity sensor does not receive the reflected signal.

In one particular embodiment, the steps of the method for gesture identification are determined by computer program instructions.

Consequently, according to a fourth aspect, the invention is also directed to a computer program for executing the steps of a method for gesture identification as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions provided by the embodiments of the present disclosure may achieve the following beneficial effects:
when a receiver of at least one proximity sensor receives a reflected signal and touch operation of an operating object over a touch screen is not detected, if it is detected that the receiver is switched from no reception of reflected signals to reception of the reflected signal and then is switched from reception of the reflected signal to no reception of reflected signals, an operating gesture of a user is identified according to the position of the at least one proximity sensor, so that a terminal may identify the operating gesture of the user even under the condition that the user does not execute touch operation on the touch screen, thereby solving the problem that a terminal cannot identify an operating gesture of a user when it is inconvenient for the user to execute touch operation on a touch screen, and achieving the effects of adding a gesture identification manner and improving gesture identification flexibility.

In addition, an operating gesture can be extended by identifying the speed of the operating gesture, a blocking gesture and a clicking gesture, thereby solving the problem that there are fewer response manners from a touch screen to the operating gesture because a user executes fewer operating gestures when not contacting with the touch screen, and achieving the effect of increasing manners for the touch screen to respond to an operating gesture.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the present disclosure and, together with the specification, serve to explain the principles of embodiments of the present disclosure.
Fig. 1 is a flow chart showing a gesture identification method, according to an exemplary embodiment;
Fig. 2A is a flow chart showing a gesture identification method, according to another exemplary embodiment;
Fig. 2B is a scene graph of determining an operating position of an operating gesture, according to an exemplary embodiment;
Fig. 2C is a scene graph of determining an operating position of an operating gesture, according to another exemplary embodiment;
Fig. 2D is a scene graph of identifying an operating gesture, according to an exemplary embodiment;
Fig. 2E is a scene graph of identifying an operating gesture, according to another exemplary embodiment;
Fig. 2F is a scene graph of identifying an operating gesture, according to still another exemplary embodiment;
Fig. 2G is a flow chart showing a method for identifying a speed of an operating gesture, according to an exemplary embodiment;
Fig. 2H is a flow chart showing a method for identifying a blocking gesture, according to an exemplary embodiment;
Fig. 2I is a flow chart showing a method for identifying a clicking gesture, according to an exemplary embodiment;
Fig. 3 is a block diagram of a gesture identification device, according to an exemplary embodiment;
Fig. 4 is a block diagram of a gesture identification device, according to another exemplary embodiment; and
Fig. 5 is a block diagram of a device configure for gesture identification, according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of devices and methods consistent with some aspects related to the present disclosure as recited in the appended claims.

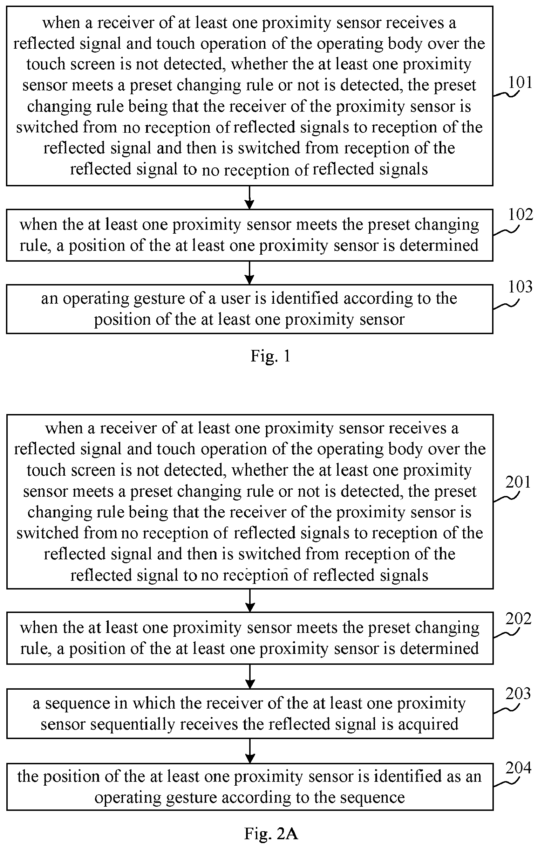

Fig. 1 is a flow chart showing a gesture identification method, according to an exemplary embodiment. The method is applied to a terminal including a touch screen, a proximity sensor is distributed in the touch screen, the proximity sensor includes a transmitter and a receiver, the transmitter is configured to send a signal, the receiver is configured to receive a reflected signal reflected after the signal is blocked by an operating object. As shown in Fig. 1, the gesture identification method includes the following steps.

In step 101, when a receiver of at least one proximity sensor receives a reflected signal and touch operation of an operating object over the touch screen is not detected, whether the at least one proximity sensor meets a preset changing rule or not is detected, the preset changing rule being that the receiver of the proximity sensor is switched from no reception of reflected signals to reception of the reflected signal and then is switched from reception of the reflected signal to no reception of reflected signals.

In step 102, when the at least one proximity sensor meets the preset changing rule, a position of the at least one proximity sensor is determined.

In step 103, an operating gesture of a user is identified according to the position of the at least one proximity sensor.

From the above, according to the gesture identification method provided by the embodiment of the present disclosure, when the receiver of the at least one proximity sensor receives the reflected signal and the touch operation of the operating object over the touch screen is not detected, if it is detected that the receiver is switched from no reception of reflected signals to reception of the reflected signal and then is switched from reception of the reflected signal to no reception of reflected signals, the operating gesture of the user is identified according to the position of the at least one proximity sensor, so that the terminal can identify the operating gesture of the user even when the user does not execute touch operation on the touch screen, thereby solving the problem that the terminal cannot identify the operating gesture of the user when it is inconvenient for the user to execute the touch operation on the touch screen, and achieving the effects of increasing a gesture identification manner and improving gesture identification flexibility.

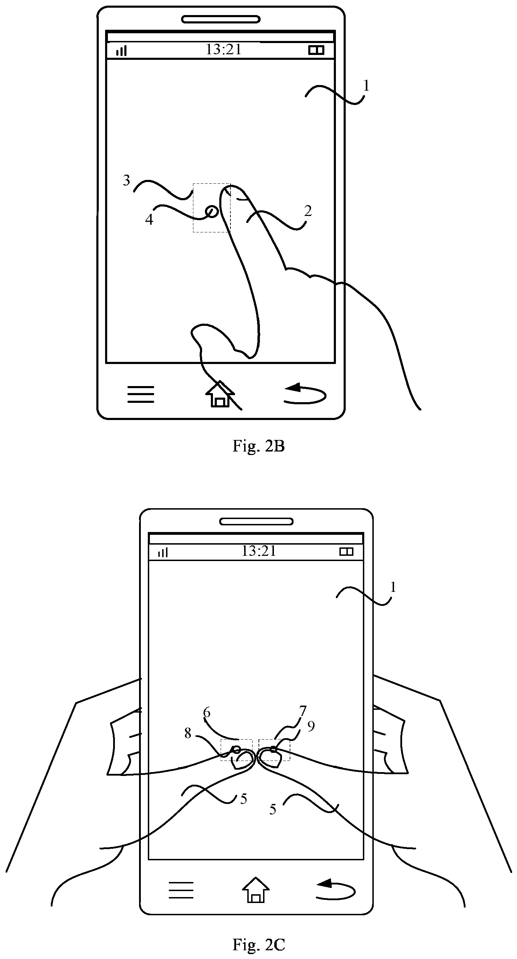

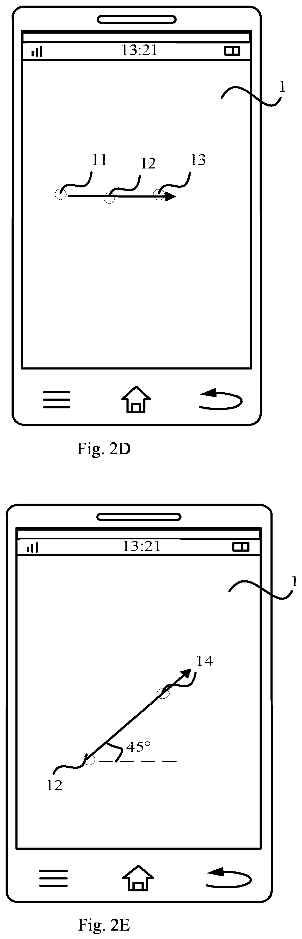

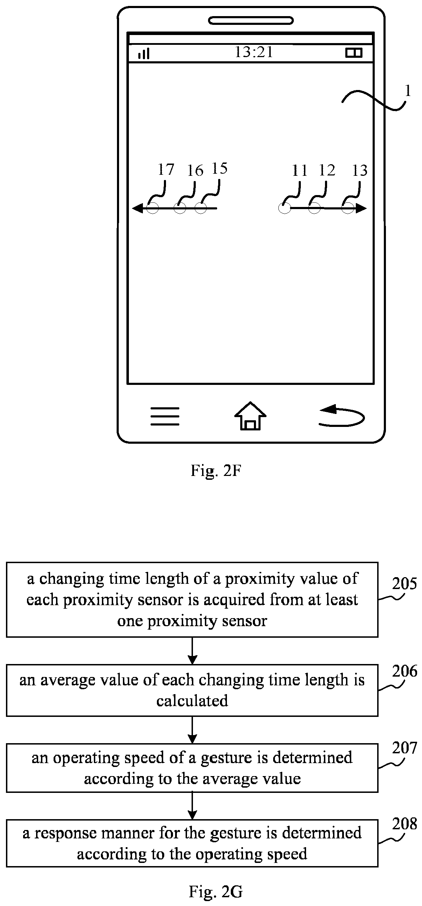

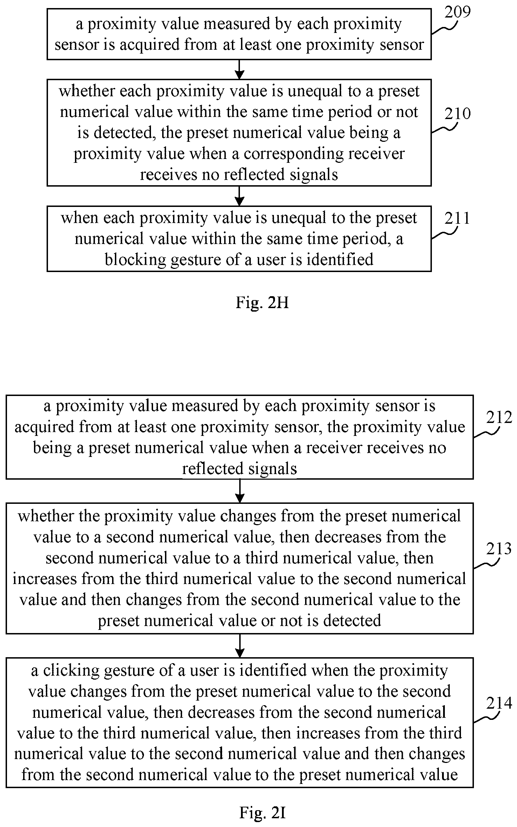

Fig. 2A is a flow chart showing a gesture identification method, according to another exemplary embodiment. The method is applied to a terminal including a touch screen, a proximity sensor is distributed in the touch screen, the proximity sensor includes a transmitter and a receiver, the transmitter is configured to send a signal, the receiver is configured to receive a reflected signal reflected after the signal is blocked by an operating object. As shown in Fig. 2, the gesture identification method includes the following steps.

In step 201, when a receiver of at least one proximity sensor receives a reflected signal and touch operation of an operating object over the touch screen is not detected, whether the at least one proximity sensor meets a preset changing rule or not is detected, the preset changing rule being that the receiver of the proximity sensor is switched from no reception of reflected signals to reception of the reflected signal and then is switched from reception of the reflected signal to no reception of reflected signals.

In the related technology as state of the art, a finger of a user is needed to contact with the touch screen, and then the terminal may identify an operating gesture of the user, that is, the operating gesture is needed to act on the touch screen. Under the condition that it is inconvenient to contact with the touch screen, for example, the finger of the user is dirty, the user may execute touch operation on the touch screen only after cleaning the finger, which may cause the problem that the user may not timely operate the terminal, or, if the user directly executes the touch operation on the touch screen, the touch screen may be contaminated. In order to solve the problem, the embodiment provides a method for identifying an operating gesture of a user without directly contacting with a touch screen with a finger, and the method is specifically as follows.

There are two types of proximity sensors distributed in the touch screen. A transmitter of a proximity sensor of a first type sends an infrared signal; a receiver of the proximity sensor may receive a reflected signal of the infrared signal when there is an object approaching the proximity sensor; when a distance between the approaching object and the proximity sensor becomes shorter, light intensity of the reflected signal received by the receiver becomes higher. Accordingly, the proximity sensor of the first type may determine a proximity value between the approaching object and the proximity sensor according to the light intensity of the reflected signal received by the receiver.

A transmitter of a proximity sensor of a second type sends an ultrasonic signal, and the transmitter and a receiver of the proximity sensor work alternately. When there is an object approaching the proximity sensor, the receiver may receive a reflected signal of the ultrasonic signal; and when a distance between the approaching object and the proximity sensor becomes shorter, it takes less time for the receiver to receive the reflected signal, so that the proximity sensor of the second type may determine a proximity value between the approaching object and the proximity sensor according to the time taken by the receiver to receive the reflected signal.

From the above, a proximity sensor of any type may determine a proximity value when an object approaches, so that the proximity sensor may determine whether the object approaches or not according to the proximity value, and report such a proximity event to a terminal when the object approaches.

The terminal detects whether there is touch operation over the touch screen or not after receiving the proximity event reported by the at least one proximity sensor. If there is touch operation over the touch screen, it is indicated that the proximity event is an operating gesture acting on the touch screen; and if there is no touch operation over the touch screen, it is indicated that the proximity event is an operating gesture not acting on the touch screen.

If the operating gesture is a swiping gesture, for each proximity sensor to which the swiping gesture in an operating process approaches, the receiver of the proximity sensor is switched from no reception of reflected signals to reception of the reflected signal and then is switched from reception of the reflected signal to no reception of reflected signals, so that whether the at least one proximity sensor meets the preset changing rule or not may be detected to identify whether the operating gesture of the user is the swiping gesture or not.

Here, a method for detecting whether the at least one proximity sensor meets the preset changing rule or not may include that:

for each proximity sensor, a proximity value measured by the proximity sensor is acquired, the proximity value being configured to indicate a distance between the operating object and the proximity sensor and the proximity value being a preset numerical value when the receiver receives no reflected signals; whether the proximity value changes from the preset numerical value to a first numerical value and then changes from the first numerical value to the preset numerical value or not is detected; and when the proximity value changes from the preset numerical value to the first numerical value and then changes from the first numerical value to the preset numerical value, it is determined that the receiver of the proximity sensor is switched from no reception of reflected signals to reception of the reflected signal and then is switched from reception of the reflected signal to no reception of reflected signals and the preset changing rule is met.

When the receiver of the proximity sensor receives no reflected signals, the proximity value of the proximity sensor is a preset threshold, and the preset threshold may be null; or, the preset threshold is a large value, for example: infinity or 10m; or, the preset threshold is a value representative of a proximity level, for example, it is set in the proximity sensor that 0 represents a proximity level which means very close, 1 represents a proximity level which means relatively closer and 2 represents a proximity level which means relatively farer, wherein the preset numerical value is set to be 2, and a setting manner for the preset threshold is not limited in the embodiment.

When the receiver of the proximity sensor receives the reflected signal, the proximity sensor may measure the proximity value; the proximity value is relatively smaller when the approaching object is relatively closer to the proximity sensor, while the proximity value is relatively larger when the approaching object is relatively farer from the proximity sensor. In this way, a change of the proximity sensor may be determined according to a change of the proximity value. That is, when the proximity value changes from the preset numerical value to the first numerical value, it is determined that the receiver of the proximity sensor is switched from no reception of reflected signals to reception of the reflected signal; and when the proximity value changes from the first numerical value to the preset numerical value, it is determined that the receiver of the proximity sensor is switched from reception of the reflected signal to no reception of reflected signals, wherein the first numerical value may be a fixed numerical value or a variable numerical value, which will not be limited in the embodiment.

In step 202, when the at least one proximity sensor meets the preset changing rule, a position of the at least one proximity sensor is determined.

When the user makes an operating gesture at a current moment, since the finger is approaching the proximity sensor, the receiver of the proximity sensor may receive a reflected signal, and an area is formed by each proximity sensor of which the receiver receives the reflected signal. In the embodiment, a position of a proximity sensor at a central position of each area may be determined as the position of the proximity sensor which meets the preset changing rule at the current moment, i.e. an operating position of the operating gesture at the current moment.

For example: as shown in Fig. 2B, a user makes operating gesture 2 at a certain moment; proximity sensors of which receivers receive reflected signals form area 3 on terminal 1, and terminal 1 obtains, by calculation, central point 4 of a position of the at least one proximity sensor, and determines the central point 4 as an operating position of the operating gesture at the moment.

For another example: as shown in Fig. 2C, a user makes operating gesture 5 at a certain moment; proximity sensors of which receivers receive reflected signals form area 6 and area 7 on terminal 1, and terminal 1 obtains, by calculation, central point 8 of a position of the at least one proximity sensor corresponding to area 6, obtains, by calculation, central point 9 of a position of the at least one proximity sensor corresponding to area 7, and determines the central point 8 and the central point 9 as operating positions of the operating gesture at the moment.

The terminal determines operating positions of the operating gesture at each moment according to the position of the at least one proximity sensor, and may identify the operating gesture of the user according to the operating positions at each moment.

In step 203, a sequence in which the receiver of the at least one proximity sensor sequentially receives the reflected signal is acquired.

If the proximity sensor reports the proximity event to the terminal, the terminal may record time when the proximity event is received when receiving the proximity event, therefore, when the operating gesture of a user is generated by continuous actions, such as: swiping operation, the terminal may acquire time when at least one proximity sensor is sequentially approached and determine the sequence in which the at least one proximity sensor is sequentially approached according to the acquired time.

In step 204, the position of the at least one proximity sensor is identified as an operating gesture according to the sequence.

An operating trace of the operating gesture out of contact with the touch screen may be obtained according to the operating positions, determined in step 202, of the operating gesture at each moment; and an operating direction of the operating gesture may be obtained according to the sequence, determined in step 203, in which the at least one proximity sensor is sequentially blocked, and the terminal may identify the operating gesture of the user according to the operating trace and the operating direction.

For example: as shown in Fig. 2D, in terminal 1, operating position 11 is determined at a first moment, operating position 12 is determined at a second moment, operating position 13 is determined at a third moment, and the operating gesture of the user is identified to be a rightward swiping gesture according to the determined positions and a sequence of the determined positions.

Optionally, the terminal may also set a first angle threshold and a second angle threshold to determine the operating direction of the operating gesture, wherein the second angle threshold is larger than the first angle threshold. The terminal freely select the operating positions determined at two moments; if an included angle between a connecting line of the two operating positions and the horizontal direction is smaller than the first angle threshold, the operating gesture is identified to be leftward or rightward swiping operation; if the included angle between the connecting line of the two operating positions and the horizontal direction is larger than the first angle threshold and smaller than the second angle threshold, the operating gesture is identified to be inclination swiping operation; and if the included angle between the connecting line of the two operating positions and the horizontal direction is larger than the second angle threshold, the operating gesture is identified to be upward or downward swiping operation.

For example: as shown in Fig. 2E, the first angle threshold is set to be 30 degrees and the second angle threshold is set to be 60 degrees in terminal 1, operating position 12 is determined at a first moment which is freely selected and operating position 14 is determined at a second moment which is freely selected, and an included angle between a connecting line of the two operating positions and the horizontal direction is 45 degrees which is larger than the first angle threshold and smaller than the second angle threshold, so that the terminal identifies the operating gesture of the user to be an upward and rightward swiping gesture according to the determined positions, a sequence of the determined positions, and the included angle between the connecting line of the positions and the horizontal direction.

Optionally, the terminal may further calculate an average value of the included angles between the connecting lines of two operating positions at adjacent moments of each group and the horizontal direction, and compares the average value with the first angle threshold and the second angle threshold; if the average value is smaller than the first angle threshold, the operating gesture is identified to be leftward or rightward swiping operation; if the average value is larger than the first angle threshold and smaller than the second angle threshold, the operating gesture is identified to be inclination swiping operation; and if the average value is larger than the second angle threshold, the operating gesture is identified to be upward or downward swiping operation.

Optionally, when the terminal determines at least two operating positions at the same moment, for each operating position, an operating position closest to the operation position at an adjacent moment and the operation position itself are determined as an operation combination, and the operating gesture of the user is identified according to each determined operation combination.

For example: as shown in Fig. 2F, in terminal 1, if operating positions 11 and 15 are determined at a first moment, operating positions 12 and 16 are determined at a second moment and operating positions 13 and 17 are determined at a third moment, the terminal determines operating positions 11, 12 and 13 as an operation combination, determines operating positions 15, 16 and 17 as an operation combination, and identifies the operating gesture of the user according to the two determined operation combinations.

Optionally, in order to provide more manners for responding to the operating gesture, the touch screen may also identify a speed of the operating gesture. Fig. 2G is a flow chart showing a method for identifying a speed of an operating gesture, according to an exemplary embodiment. The method for identifying a speed of an operating gesture is applied to a terminal including a touch screen; a proximity sensor is distributed in the touch screen, the proximity sensor includes a transmitter and a receiver, the transmitter is configured to send a signal, the receiver is configured to receive a reflected signal reflected after the signal is blocked by an operating object. As shown in Fig. 2G, the method for identifying a speed of an operating gesture includes the following steps.

In step 205, a changing time length of a proximity value of each proximity sensor is acquired from at least one proximity sensor.

For each proximity sensor, in a possible implementation mode, the terminal records time when the proximity value of the proximity sensor is kept unequal to a preset numerical value; when the proximity sensor meets a preset changing rule, the terminal may calculate, according to the recorded time, the changing time length during which the proximity value of the proximity sensor is kept unequal to the preset numerical value. In another possible implementation mode, the terminal may acquire, before detecting whether the proximity sensor meets the preset changing rule, the changing time length during which the proximity value of the proximity sensor is kept unequal to the preset numerical value, and directly reads the acquired changing time length when detecting that the proximity sensor meets the preset changing rule. In the embodiment, there are no limits made to time when the terminal acquires the changing time length during which the proximity value is kept unequal to the preset numerical value.

In step 206, an average value of each changing time length is calculated.

The terminal calculates the average value of each acquired changing time length, or, the terminal selects at least one changing time length from each acquired changing time length, and calculates an average value of the at least one changing time length.

In step 207, an operating speed of a gesture is determined according to the average value.

The terminal presets a time threshold, and may compare the average value with the time threshold to determine an operating speed of a gesture, wherein there may be one or more time thresholds.

For example: two time thresholds are set in the terminal, i.e.: a first time threshold and a second time threshold respectively, and the first time threshold is smaller than the second time threshold. If the average value is larger than the first time threshold, the terminal determines that the gesture is a low-speed gesture; if the average value is smaller than the second time threshold, the terminal determines that the gesture is a high-speed gesture; and the average value is larger than the second time threshold and smaller than the first time threshold, the terminal determines that the gesture is a medium-speed gesture.

In step 208, a response manner for the gesture is determined according to the operating speed.

A response manner of the terminal to the operating gesture is added by identifying the operating speed of the operating gesture.

For example: a response manner corresponding to a high-speed rightward swiping gesture is fast forward of a video; and a response manner corresponding to a low-speed rightward swiping gesture is jump to the next video.

Optionally, the embodiment further provides a method for identifying a blocking gesture of a user. Fig. 2H is a flow chart showing a method for identifying a blocking gesture. The method includes the following steps.

In step 209, a proximity value measured by each proximity sensor is acquired from the at least one proximity sensor.

In step 210, whether each proximity value is unequal to a preset numerical value within the same time period or not is detected, the preset numerical value being a proximity value when the receiver receives no reflected signals.

If detecting that there exists at least one proximity value at the same moment, the terminal continues detecting whether the at least one proximity value is kept unequal to the preset numerical value within the same time period or not.

In step 211, when each proximity value is unequal to the preset numerical value within the same time period, the blocking gesture of the user is identified.

The terminal may identify that the operating gesture of the user is a blocking gesture when each proximity value is kept unequal to the preset numerical value within the same time period. The terminal identifies the blocking gesture of the user and extends the response manner to the operating gesture. For example, when the terminal identifies that the user makes a blocking gesture, a corresponding response manner is pausing a video or music; or, when the terminal identifies that the user makes a blocking gesture, a corresponding response manner is clicking a certain application program.

Optionally, a first preset time may further be set in the terminal, and when a time length for which each proximity value is kept unequal to the preset numerical value is longer than or equal to the first preset time, the operating gesture of the user is identified to be a first type of blocking gesture. Or, a second preset time is set in the terminal, and when the time length for which each proximity value is kept unequal to the preset numerical value is shorter than or equal to the second preset time, the operating gesture of the user is identified to be a second type of blocking gesture. The terminal sets different response manners for different types of blocking gestures.

Optionally, the embodiment further provides a method for identifying a clicking gesture of a user. Fig. 2I is a flow chart showing a method for identifying a clicking gesture, and the method includes the following steps.

In step 212, a proximity value measured by each proximity sensor is acquired from the at least one proximity sensor, the proximity value being a preset numerical value when the receiver receives no reflected signals.

In step 213, whether the proximity value changes from the preset numerical value to a second numerical value, then decreases from the second numerical value to a third numerical value, then increases from the third numerical value to the second numerical value and then changes from the second numerical value to the preset numerical value or not is detected.

If the operating gesture is a clicking gesture, for each proximity sensor approached in the operating process of the clicking gesture, the measured proximity value gradually decreases from the preset numerical value and then gradually increases to the preset numerical value, so that whether the gesture made by the user is a clicking gesture or not may be identified by detecting whether the proximity value of the at least one proximity sensor meets such a changing trend or not.

In step 214, when the proximity value changes from the preset numerical value to the second numerical value, then decreases from the second numerical value to the third numerical value, then increases from the third numerical value to the second numerical value and then changes from the second numerical value to the preset numerical value, a clicking gesture of the user is identified.

For each proximity sensor, when the terminal detects that the proximity value of the proximity sensor changes from the preset numerical value to the second numerical value, it is indicated that an object approaches; if the proximity value continues changing and decreases from the second numerical value to the third numerical value, it is indicated that a distance between the object and the proximity is shortened; and if the proximity value continues changing, increases from the third numerical value to the second numerical value and then increases to the preset numerical value, it is indicated that the object gradually gets far away from the proximity sensor; a proximity value changing rule corresponding to the clicking gesture is met, wherein the third numerical value is variable, and different clicking gestures may correspond to different third numerical values.

From the above, according to the gesture identification method provided by the present disclosure, when the receiver of the at least one proximity sensor receives the reflected signal and the touch operation of the operating object over the touch screen is not detected, if it is detected that the receiver is switched from reception of no reflected signals to reception of the reflected signal and then is switched from reception of the reflected signal to reception of no reflected signals, the operating gesture of the user is identified according to the position of the at least one proximity sensor, so that the terminal may identify the operating gesture of the user under the condition that the user does not execute touch operation on the touch screen, thereby solving the problem that the terminal may not identify the operating gesture of the user when it is inconvenient for the user to execute the touch operation on the touch screen, and having the effects of increasing a gesture identification manner and improving gesture identification flexibility.

In addition, the operating gesture can be extended by identifying a blocking gesture, a clicking gesture and the speed of an operating gesture, thereby solving the problem that there are fewer manners for the touch screen to respond to the operating gesture due to the fact that the user executes fewer operating gestures when not contacting with the touch screen, and having the effect of increasing manners for the touch screen to respond to the operating gesture.

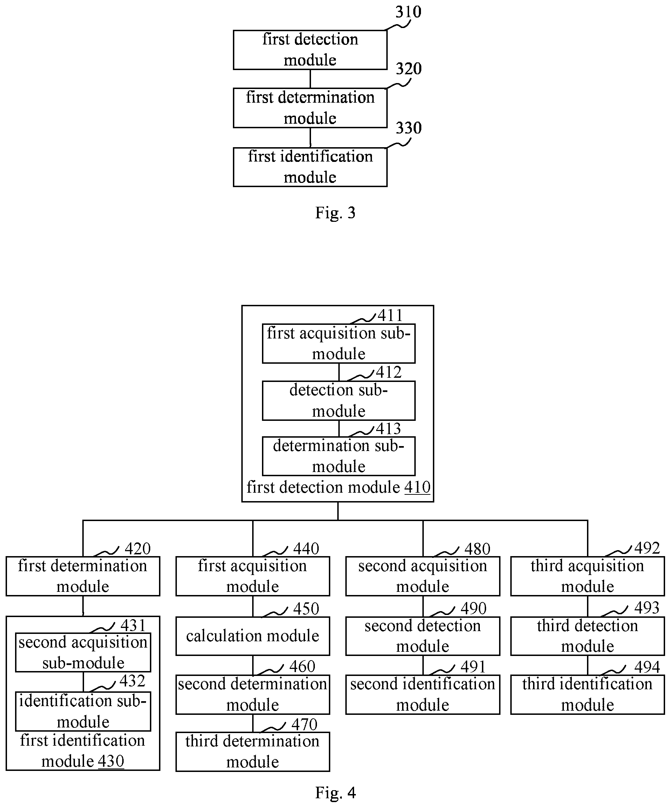

Fig. 3 is a block diagram of a gesture identification device, according to an exemplary embodiment. The device is applied to a terminal including a touch screen; a proximity sensor is distributed in the touch screen; the proximity sensor includes a transmitter and a receiver; the transmitter is configured to send a signal; the receiver is configured to receive a reflected signal reflected after the signal is blocked by an operating object. As shown in Fig. 3, the gesture identification device includes: a first detection module 310, a first determination module 320 and a first identification module 330.

The first detection module 310 is configured to, when a receiver of at least one proximity sensor receives a reflected signal and touch operation of the operating object over the touch screen is not detected, detect whether the at least one proximity sensor meets a preset changing rule or not, the preset changing rule being that the receiver of the proximity sensor is switched from no reception of reflected signals to reception of the reflected signal and then is switched from reception of the reflected signal to no reception of reflected signals;
the first determination module 320 is configured to, when a detection result of the first detection module 310 is that the at least one proximity sensor meets the preset changing rule, determine a position of the at least one proximity sensor; and
the first identification module 330 is configured to identify an operating gesture of a user according to the position, determined by the first determination module 320, of the at least one proximity sensor.

From the above, according to the gesture identification device provided by the present disclosure, when the receiver of the at least one proximity sensor receives the reflected signal and the touch operation of the operating object over the touch screen is not detected, if it is detected that the receiver is switched from no reception of reflected signals to reception of the reflected signal and then is switched from reception of the reflected signal to no reception of reflected signals, the operating gesture of the user is identified according to the position of the at least one proximity sensor, so that the terminal may identify the operating gesture of the user even when the user does not execute touch operation on the touch screen, the problem that the terminal may not identify the operating gesture of the user when it is inconvenient for the user to execute the touch operation on the touch screen is solved, and the effects of increasing a gesture identification manner and improving gesture identification flexibility are achieved.

Fig. 4 is a block diagram of a gesture identification device, according to an exemplary embodiment. The device is applied to a terminal including a touch screen; a proximity sensor is distributed in the touch screen; the proximity sensor includes a transmitter and a receiver; the transmitter is configured to send a signal; the receiver is configured to receive a reflected signal reflected after the signal is blocked by an operating object. As shown in Fig. 4, the gesture identification device includes: a first detection module 410, a first determination module 420 and a first identification module 430.

The first detection module 410 is configured to, when a receiver of at least one proximity sensor receives a reflected signal and touch operation of the operating object over the touch screen is not detected, detect whether the at least one proximity sensor meets a preset changing rule or not, the preset changing rule being that the receiver of the proximity sensor is switched from no reception of reflected signals to reception of the reflected signal and then is switched from reception of the reflected signal to no reception of reflected signals.

The first determination module 420 is configured to, when a detection result of the first detection module 410 is that the at least one proximity sensor meets the preset changing rule, determine a position of the at least one proximity sensor.

The first identification module 430 is configured to identify an operating gesture of a user according to the position, determined by the first determination module 420, of the at least one proximity sensor.

Optionally, the first detection module 410 includes: a first acquisition sub-module 411, a detection sub-module 412 and a determination sub-module 413.

The first acquisition sub-module 411 is configured to, for each proximity sensor, acquire a proximity value measured by the proximity sensor, the proximity value being configured to indicate a distance between the operating object and the proximity sensor and the proximity value being a preset numerical value when the receiver receives no reflected signals.

The detection sub-module 412 is configured to detect whether the proximity value acquired by the first acquisition sub-module 411 changes from the preset numerical value to a first numerical value and then changes from the first numerical value to the preset numerical value or not.

The determination sub-module 413 is configured to, when a detection result of the detection sub-module 412 is that the proximity value changes from the preset numerical value to the first numerical value and then changes from the first numerical value to the preset numerical value, determine that the receiver of the proximity sensor is switched from no reception of reflected signals to reception of the reflected signal and then is switched from reception of the reflected signal to no reception of reflected signals and the preset changing rule is met.

Optionally, the first identification module 430 includes: a second acquisition sub-module 431 and an identification sub-module 432.

The second acquisition sub-module 431 is configured to acquire a sequence in which the receiver of the at least one proximity sensor sequentially receives the reflected signal.

The identification sub-module 432 is configured to identify the position of the at least one proximity sensor as the operating gesture according to the sequence acquired by the second acquisition sub-module 431.

Optionally, the device further includes: a first acquisition module 440, a calculation module 450, a second determination module 460 and a third determination module 470.

The first acquisition module 440 is configured to acquire, from the at least one proximity sensor, a changing time length of the proximity value of each proximity sensor.

The calculation module 450 is configured to calculate an average value of each changing time length acquired by the first acquisition module 440.

The second determination module 460 is configured to determine an operating speed of the gesture according to the average value calculated by the calculation module 450.

The third determination module 470 is configured to determine a response manner for the gesture according to the operating speed determined by the second determination module 460.

Optionally, the device further includes: a second acquisition module 480, a second detection module 490 and a second identification module 491.

The second acquisition module 480 is configured to acquire, from the at least one proximity sensor, a proximity value measured by each proximity sensor.

The second detection module 490 is configured to detect whether each proximity value acquired by the second acquisition module 480 is unequal to a preset numerical value within the same time period or not, the preset numerical value being a proximity value when the corresponding receiver receives no reflected signals.

The second identification module 491 is configured to, when a detection result of the second detection module 490 is that each proximity value is unequal to the preset numerical value within the same time period, identify a blocking gesture of the user.

Optionally, the device further includes: a third acquisition module 492, a third detection module 493 and a third identification module 494.

The third acquisition module 492 is configured to acquire a proximity value measured by each proximity sensor in the at least one proximity sensor, the proximity value being a preset numerical value when the receiver receives no reflected signals.

The third detection module 493 is configured to detect whether the proximity value acquired by the third acquisition module 492 changes from the preset numerical value to a second numerical value, then decreases from the second numerical value to a third numerical value, then increases from the third numerical value to the second numerical value and then changes from the second numerical value to the preset numerical value or not.

The third identification module 494 is configured to, when a detection result of the third detection module 493 is that the proximity value changes from the preset numerical value to the second numerical value, then decreases from the second numerical value to the third numerical value, then increases from the third numerical value to the second numerical value and then changes from the second numerical value to the preset numerical value, identify a clicking gesture of the user.

From the above, according to the gesture identification device provided by the present disclosure, when a receiver of at least one proximity sensor receives a reflected signal and the touch operation of an operating object over a touch screen is not detected, if it is detected that the receiver is switched from no reception of reflected signals to reception of the reflected signal and then is switched from reception of the reflected signal to no reception of reflected signals, the operating gesture of a user is identified according to the position of the at least one proximity sensor, so that the terminal may identify the operating gesture of the user even when the user does not execute touch operation on the touch screen, the problem that the terminal may not identify the operating gesture of the user when it is inconvenient for the user to execute the touch operation on the touch screen is solved, and the effects of adding a gesture identification manner and improving gesture identification flexibility are achieved.

In addition, the operating gesture can be extended by identifying a blocking gesture, a clicking gesture and the speed of an operating gesture, so that the problem that there are fewer response manners for the touch screen to respond to the operating gesture due to the fact that the user executes fewer operating gestures when not contacting with the touch screen is solved, and the effect of adding manners for responses of the touch screen to the operating gesture is achieved.

With respect to the devices in the above embodiments, the specific manners for performing operations for individual modules therein have been described in detail in the embodiments regarding the methods, which will not be elaborated herein.

An exemplary embodiment of the present disclosure provides a gesture identification device, which may implement the gesture identification method provided by the present disclosure, the device is applied to a touch screen, wherein a proximity sensor is distributed in the touch screen, the proximity sensor includes a transmitter and a receiver, the transmitter is configured to send a signal, and the receiver is configured to receive a reflected signal reflected after the signal is blocked by an operating object. The gesture identification device includes: a processor and a memory configured to store instructions executable by the processor,
wherein the processor is configured to:
when a receiver of at least one proximity sensor receives a reflected signal and touch operation of the operating object over the touch screen is not detected, detect whether the at least one proximity sensor meets a preset changing rule or not, the preset changing rule being that the receiver of the proximity sensor is switched from no reception of reflected signals to reception of the reflected signal and then is switched from reception of the reflected signal to no reception of reflected signals;
when the at least one proximity sensor meets the preset changing rule, determine a position of the at least one proximity sensor; and
identify an operating gesture of a user according to the position of the at least one proximity sensor.

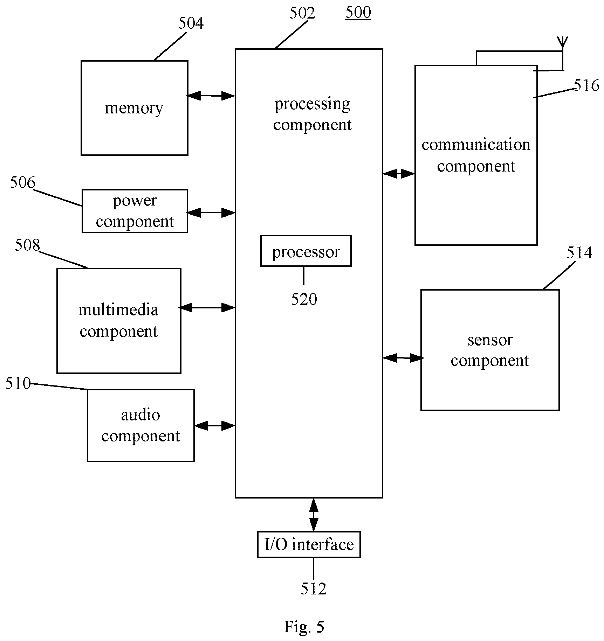

Fig. 5 is a block diagram of a gesture identification device 500, according to an exemplary embodiment. For example, the device 500 may be a mobile phone, a computer, a digital broadcast terminal, a messaging device, a gaming console, a tablet, a medical device, fitness equipment, a personal digital assistant and the like.

Referring to Fig. 5, the device 500 may include one or more of the following components: a processing component 502, a memory 504, a power component 506, a multimedia component 508, an audio component 510, an Input/Output (I/O) interface 512, a sensor component 514, and a communication component 516.

The processing component 502 typically controls overall operations of the device 500, such as the operations associated with display, telephone calls, data communications, camera operations, and recording operations. The processing component 502 may include one or more processors 518 to execute instructions to perform all or part of the steps in the abovementioned method. Moreover, the processing component 502 may include one or more modules which facilitate interaction between the processing component 502 and the other components. For instance, the processing component 502 may include a multimedia module to facilitate interaction between the multimedia component 508 and the processing component 502.

The memory 504 is configured to store various types of data to support the operation of the device 500. Examples of such data include instructions for any application programs or methods operated on the device 500, contact data, phonebook data, messages, pictures, video, etc. The memory 504 may be implemented by any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, and a magnetic or optical disk.

The power component 506 provides power for various components of the device 500. The power component 506 may include a power management system, one or more power supplies, and other components associated with the generation, management and distribution of power for the device 500.

The multimedia component 508 includes a screen providing an output interface between the device 500 and a user inclduing a Touch Panel. In some embodiments, the screen may include a Liquid Crystal Display (LCD)The screen is implemented as a touch screen to receive an input signal from the user. The TP includes one or more touch sensors to sense touches, swipes and gestures on the TP. The touch sensors may not only sense a boundary of a touch or swipe action, but also sense a duration and pressure associated with the touch or swipe action. In some embodiments, the multimedia component 508 includes a front camera and/or a rear camera. The front camera and/or the rear camera may receive external multimedia data when the device 500 is in an operation mode, such as a photographing mode or a video mode. Each of the front camera and the rear camera may be a fixed optical lens system or have focusing and optical zooming capabilities.

The audio component 510 is configured to output and/or input an audio signal. For example, the audio component 510 includes a Microphone (MIC), and the MIC is configured to receive an external audio signal when the device 500 is in the operation mode, such as a call mode, a recording mode and a voice recognition mode. The received audio signal may be further stored in the memory 504 or sent through the communication component 516. In some embodiments, the audio component 510 further includes a speaker configured to output the audio signal.

The I/O interface 512 provides an interface between the processing component 502 and a peripheral interface module. The peripheral interface module may be a keyboard, a click wheel, a button and the like. The button may include, but not limited to: a home button, a volume button, a starting button and a locking button.

The sensor component 514 includes one or more sensors configured to provide status assessment in various aspects for the device 500. For instance, the sensor component 514 may detect an on/off status of the device 500 and relative positioning of components, such as a display and small keyboard of the device 500. The sensor component 514 may further detect a change in a position of the device 500 or a component of the device 500, presence or absence of contact between the user and the device 500, orientation or acceleration/deceleration of the device 500 and a change in temperature of the device 500. The sensor component 514 includes a proximity sensor configured to detect presence of an object nearby without any physical contact. The sensor component 514 may also include a light sensor, such as a Complementary Metal Oxide Semiconductor (CMOS) or Charge Coupled Device (CCD) image sensor, configured for use in an imaging application. In some embodiments, the sensor component 514 may also include an acceleration sensor, a gyroscope sensor, a magnetic sensor, a pressure sensor or a temperature sensor.

The communication component 516 is configured to facilitate wired or wireless communication between the device 500 and other device. The device 500 may access a communication-standard-based wireless network, such as a Wireless Fidelity (WiFi) network, a 2nd-Generation (2G) or 3rd-Generation (3G) network or a combination thereof. In an exemplary embodiment, the communication component 516 receives a broadcast signal or broadcast associated information from an external broadcast management system through a broadcast channel. In an exemplary embodiment, the communication component 516 further includes a Near Field Communication (NFC) module to facilitate short-range communication. For example, the NFC module may be implemented on the basis of a Radio Frequency Identification (RFID) technology, an Infrared Data Association (IrDA) technology, an Ultra-WideBand (UWB) technology, a BlueTooth (BT) technology and other technology.

In an exemplary embodiment, the device 500 may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, and is configured to execute the abovementioned method.

In an exemplary embodiment, there is also provided a non-transitory computer-readable storage medium including an instruction, such as the memory 504 including an instruction, and the instruction may be executed by the processor 518 of the device 500 to implement the abovementioned method. For example, the non-transitory computer-readable storage medium may be a ROM, a Radom Access Memory (RAM), a Compact Disc Read-Only Memory (CD-ROM), a magnetic tape, a floppy disc, an optical data storage device and the like.

Other embodiments of the present disclosure will be apparent to those skilled in the art from consideration of the specification and practice of embodiments of the present disclosure. This application is intended to cover any variations, uses, or adaptations of embodiments of the present disclosure following the general principles thereof and including such departures from embodiments of the present disclosure as come within known or customary practice in the art. It is intended that the specification and examples be considered as exemplary only, with a true scope of embodiments of the present disclosure being indicated by the following claims.

It will be appreciated that embodiments of the present disclosure is not limited to the exact construction that has been described above and illustrated in the accompanying drawings, and that various modifications and changes may be made without departing from the scope thereof. It is intended that the scope of embodiments of the present disclosure only be limited by the appended claims.

## Claims

1. A gesture identification method, applied to a terminal comprising a touch screen, a proximity sensor being distributed in the touch screen, the proximity sensor comprising a transmitter and a receiver, the transmitter being configured to send a signal, the receiver being configured to receive a reflected signal reflected after the signal is blocked by an operating object, the method comprising:
when (101) a receiver of at least one proximity sensor receives a reflected signal and touch operation of the operating object over the touch screen is not detected, detecting whether the at least one proximity sensor meets a preset changing rule or not, the preset changing rule being that the receiver of the proximity sensor is switched from no reception of reflected signals to reception of the reflected signal and then is switched from reception of the reflected signal to no reception of reflected signals;
when (102) the at least one proximity sensor meets the preset changing rule, determining a position of the at least one proximity sensor; and
identifying (103) an operating gesture of a user according to the position of the at least one proximity sensor.

2. The method according to claim 1, wherein detecting whether the at least one proximity sensor meets the preset changing rule or not comprises:
for each of the at least one proximity sensor, acquiring a proximity value measured by the proximity sensor, the proximity value being configured to indicate a distance between the operating object and the proximity sensor and the proximity value being a preset numerical value when the receiver receives no reflected signals;
detecting whether the proximity value changes from the preset numerical value to a first numerical value and then changes from the first numerical value to the preset numerical value or not; and
when the proximity value changes from the preset numerical value to the first numerical value and then changes from the first numerical value to the preset numerical value, determining that the receiver of the proximity sensor is switched from no reception of reflected signals to reception of the reflected signal and then is switched from reception of the reflected signal to no reception of reflected signals and the preset changing rule is met.

3. The method according to claim 1, wherein identifying the operating gesture of the user according to the position of the at least one proximity sensor comprises:
acquiring (203) a sequence in which the receiver of the at least one proximity sensor sequentially receives the reflected signal; and
identifying (204) the position of the at least one proximity sensor as the operating gesture according to the sequence.

4. The method according to any one of claims 1 to 3, further comprising:
acquiring (205), from the at least one proximity sensor, a changing time length of the proximity value of each of the at least one proximity sensor;
calculating (206) an average value of each changing time length;
determining (207) an operating speed of the gesture according to the average value; and
determining (208)a response manner for the gesture according to the operating speed.

5. The method according to claim 1, further comprising:
acquiring (209), from the at least one proximity sensor, a proximity value measured by each of the at least one proximity sensor;
detecting (210) whether each proximity value is unequal to a preset numerical value within a same time period or not, the preset numerical value being a proximity value when the receiver receives no reflected signals; and
when (211) each proximity value is unequal to the preset numerical value within the same time period, identifying a blocking gesture of the user.

6. The method according to claim 1, further comprising:
acquiring (212), from the at least one proximity sensor, a proximity value measured by each of the at least one proximity sensor, the proximity value being a preset numerical value when the receiver receives no reflected signals;
detecting (213) whether the proximity value changes from the preset numerical value to a second numerical value, then decreases from the second numerical value to a third numerical value, then increases from the third numerical value to the second numerical value and then changes from the second numerical value to the preset numerical value or not; and
identifying (214) a clicking gesture of the user when the proximity value changes from the preset numerical value to the second numerical value, then decreases from the second numerical value to the third numerical value, then increases from the third numerical value to the second numerical value and then changes from the second numerical value to the preset numerical value.

7. A gesture identification device, applied to a terminal comprising a touch screen, a proximity sensor being distributed in the touch screen, the proximity sensor comprising a transmitter and a receiver, the transmitter being configured to send a signal, the receiver being configured to receive a reflected signal reflected after the signal is blocked by an operating object, the device comprising:
a first detection module (310), configured to, when a receiver of at least one proximity sensor receives a reflected signal and touch operation of the operating object over the touch screen is not detected, detect whether the at least one proximity sensor meets a preset changing rule or not, the preset changing rule being that the receiver of the proximity sensor is switched from no reception of reflected signals to reception of the reflected signal and then is switched from reception of the reflected signal to no reception of reflected signals;
a first determination module(320), configured to, when a detection result of the first detection module is that the at least one proximity sensor meets the preset changing rule, determine a position of the at least one proximity sensor; and
a first identification module(330), configured to identify an operating gesture of a user according to the position, determined by the first determination module, of the at least one proximity sensor.

8. The device according to claim 7, wherein the first detection module comprises:
a first acquisition sub-module(411), configured to, for each of the at least one proximity sensor, acquire a proximity value measured by the proximity sensor, the proximity value being configured to indicate a distance between the operating object and the proximity sensor and the proximity value being a preset numerical value when the receiver receives no reflected signals;
a detection sub-module(412), configured to detect whether the proximity value acquired by the first acquisition sub-module changes from the preset numerical value to a first numerical value and then changes from the first numerical value to the preset numerical value or not; and
a determination sub-module(413), configured to, when a detection result of the detection sub-module is that the proximity value changes from the preset numerical value to the first numerical value and then changes from the first numerical value to the preset numerical value, determine that the receiver of the proximity sensor is switched from no reception of reflected signals to reception of the reflected signal and then is switched from reception of the reflected signal to no reception of reflected signals and the preset changing rule is met.

9. The device according to claim 7, wherein the first identification module comprises:
a second acquisition sub-module(431), configured to acquire a sequence in which the receiver of the at least one proximity sensor sequentially receives the reflected signal; and
an identification sub-module(432), configured to identify the position of the at least one proximity sensor as the operating gesture according to the sequence acquired by the second acquisition sub-module.

10. The device according to any one of claims 7 to 9, further comprising:
a first acquisition module(440), configured to acquire, from the at least one proximity sensor, a changing time length of the proximity value of each of the at least one proximity sensor;
a calculation module(450), configured to calculate an average value of each changing time length acquired by the first acquisition module;
a second determination module(460), configured to determine an operating speed of the gesture according to the average value calculated by the calculation module; and
a third determination module(470), configured to determine a response manner for the gesture according to the operating speed determined by the second determination module.

11. The device according to claim 7, further comprising:
a second acquisition module(480), configured to acquire, from the at least one proximity sensor, a proximity value measured by each of the at least one proximity sensor;
a second detection module(490), configured to detect whether each proximity value acquired by the second acquisition module is unequal to a preset numerical value within a same time period or not, the preset numerical value being a proximity value when the receiver receives no reflected signals; and
a second identification module(491), configured to, when a detection result of the second detection module is that each proximity value is unequal to the preset numerical value within the same time period, identify a blocking gesture of the user.

12. The device according to claim 7, further comprising:
a third acquisition module(492), configured to acquire, from the at least one proximity sensor, a proximity value measured by each of the at least one proximity sensor, the proximity value being a preset numerical value when the receiver receives no reflected signals;
a third detection module(493), configured to detect whether the proximity value acquired by the third acquisition module changes from the preset numerical value to a second numerical value, then decreases from the second numerical value to a third numerical value, then increases from the third numerical value to the second numerical value and then changes from the second numerical value to the preset numerical value or not; and
a third identification module(494), configured to identify a clicking gesture of the user when a detection result of the third detection module is that the proximity value changes from the preset numerical value to the second numerical value, then decreases from the second numerical value to the third numerical value, then increases from the third numerical value to the second numerical value and then changes from the second numerical value to the preset numerical value.

13. A gesture identification device, applied to a terminal comprising a touch screen, a proximity sensor being distributed in the touch screen, the proximity sensor comprising a transmitter and a receiver, the transmitter being configured to send a signal, the receiver being configured to receive a reflected signal reflected after the signal is blocked by an operating object, the device comprising:
a processor(520); and
a memory (504) for storing instructions executable by the processor,
wherein the processor is configured to:
when a receiver of at least one proximity sensor receives a reflected signal and touch operation of the operating object over the touch screen is not detected, detect whether the at least one proximity sensor meets a preset changing rule or not, the preset changing rule being that the receiver of the proximity sensor is switched from no reception of reflected signals to reception of the reflected signal and then is switched from reception of the reflected signal to no reception of reflected signals;
when the at least one proximity sensor meets the preset changing rule, determine a position of the at least one proximity sensor; and
identify an operating gesture of a user according to the position of the at least one proximity sensor.

14. A recording medium readable by a computer and having recorded thereon a computer program including instructions for executing the steps of a method for gesture identification according to any one of claims 1 to 6.
